# EUROPEAN PATENT APPLICATION

(11) **EP 2 061 139 A2**
(43) Date of publication of application: **20.05.2009**
(21) Application number: 08019357.6
(22) Date of filing: 05.11.2008
(51) Int. Cl.: H02K 19/22

(54) **Vehicle alternator**

(30) Priority: 06.11.2007 JP 2007288001
(71) Applicant: Hitachi Ltd., Chiyoda-ku Tokyo 100-8280 (JP)
(72) Inventor: Kanazawa, Hiroshi, Tokyo 100-8220 (JP); Watari, Shinjiro, Tokyo 100-8220 (JP); Honma, Masahiko, Tokyo 100-8220 (JP)
(74) Representative: Beetz & Partner

(57) **Abstract**

An alternator for a vehicle includes: a stator that is configured by a concentrated winding system in that a stator coil for a single phase is wound on a single pole; and a rotor with 16 or more poles, that is disposed to face the stator so as to be rotatable with a gap intervening therebetween, wherein a pole ratio of the rotor and the stator is 2:3.

## Description

### INCORPORATION BY REFERENCE

The disclosure of the following priority application is herein incorporated by reference:
Japanese Patent Application No. 2007-288001 filed November 6th 2007.

The present invention relates to an alternator for a vehicle, a rotating electric machine for a vehicle, a method for manufacturing an alternator for a vehicle, and a vehicle.

An alternator for a vehicle exists as an example of a rotating electric machine for a vehicle. Japanese Laid-open Patent Publication No. H11-285217 therefore discloses an alternator using rectangular wires within stator slots in order to improve cooling and a space factor as technology for improving this situation. In Japanese Laid-open Patent Publication No. 2001-103721, technology is disclosed where the slot area is increased and the resistance of circular wire is lowered in order to improve efficiency. Further, in Japanese Laid-open Patent Publication No. H11-27914, technology is disclosed where the stator coil is constructed using a concentrated winding system and a relationship between the number of poles and the number of slots is determined.

Since a rotating electric machine for use in a vehicle rotates in synchronization with an engine, the most effective way to use such a device is to increase the efficiency of the device in the rotational speed range in which the engine is most frequently used. This point, however, was not given sufficient consideration in the related art.

### SUMMARY OF THE INVENTION

An alternator for a vehicle according to a first aspect of the present invention comprises: a stator that is configured by a concentrated winding system in that a stator coil for a single phase is wound on a single pole; and a rotor with 16 or more poles, that is disposed to face the stator so as to be rotatable with a gap intervening therebetween, wherein: a pole ratio of the rotor and the stator is 2:3.

A vehicle according to a second aspect of the present invention comprises: the alternator for a vehicle according to the first aspect; an engine to which the alternator for a vehicle is connected as a generator; and a continuously variable automatic transmission connected to the engine.

A vehicle according to a third aspect of the present invention comprises: the alternator for a vehicle according to the first aspect, and a diesel engine with the alternator for a vehicle connected as a generator.

According to a fourth aspect of the present invention, a method for manufacturing the alternator for a vehicle according to the first aspect comprises: arranging a core back of the stator in a substantially straight-line; providing a coil around an I-shaped tooth that is independent of the core back; inserting the I-shaped tooth into a tooth insertion section of the core back from an axial direction; and rounding the core back using a roller and welding the core back via an abutting section.

An alternator for a vehicle according to a fifth aspect of the present invention comprises: a rotor with 20 poles; a stator with 24 poles, that is disposed to face the rotor with a gap intervening therebetween, the stator comprising a stator coil constituted by first three-phase coils of even-numbered coils and second three-phase coils of odd-numbered coils arranged in a circumferential direction; and a rectifier circuit that independently rectifies alternating currents of the first coils and the second coils.

A rotating electric machine for a vehicle according to a sixth aspect of the present invention comprises: a stator that is configured by a concentrated winding system in that a stator coil for a single phase is wound at a single pole; a rotor with 16 or more poles, that is disposed to face the stator so as to be rotatable with a gap intervening therebetween; and a switching circuit connected to the stator coils, wherein a pole ratio of the rotor and the stator is 2:3.

### BRIEF DESCRIPTION OF THE DRAWINGS

FIG. 1 shows a table of a degree of importance for efficiency.
FIG. 2 shows a graph of the relationship between the number of poles and the number of windings.
FIG. 3 is a graph showing the relationship between the number of poles and loss.
FIG. 4 is a graph showing the relationship between the number of poles and iron loss.
FIG. 5 shows the relationship between copper loss and iron loss occurring at 3000 rpm.
FIG. 6 shows the relationship between the number of poles and the number of slots for each winding system.
FIG. 7 is a graph illustrating effective slot area of a distributed winding system.
FIG. 8 shows the relationship between the number of poles and an annular mode.
FIG. 9 is a graph showing the relationship of amplitude and the annular mode.
FIG. 10A and FIG. 10B show a difference in coil length reduction effects for each number of poles when changing from the distributed winding system to the concentrated winding system.
FIG. 11 shows an alternator for a vehicle incorporating a starter with the concentrated winding system of a first embodiment of the present invention.
FIGS. 12A to 12C show structural views of a rotor and a stator.
FIG. 13 is an illustration showing a method for assembling the stator.
FIG. 14 is a perspective view describing cooling of the stator coil.
FIG. 15 shows an alternator for a vehicle of a second embodiment of the present invention.
FIG. 16 shows a relationship between plate thickness of a stator core material and the number of poles.
FIG. 17A and FIG. 17B show a comparison of a press process surface and an etching process surface.
FIG. 18 is a structural view showing a three-phase, two-winding structure of a third embodiment of the present invention.
FIG. 19 is a structural view showing a three-phase, two-winding structure of a fourth embodiment of the present invention.
FIG. 20 shows a rotating electric machine for a vehicle of a fifth embodiment of the present invention.
FIG. 21 is a view showing an outline structure for a vehicle of the embodiments of the present invention.

### DESCRIPTION OF PREFERRED EMBODIMENTS

An alternator for a vehicle, a vehicle equipped with the alternator for a vehicle, a method for manufacturing the alternator for a vehicle, and a rotating electric machine for a vehicle of the embodiments of the present invention are described below.

In the technology of the related art, in order to implement high efficiency, a cross-sectional area of a conductor is made large so that winding resistance at a rotating electric machine becomes small. In order to achieve this, ideas have been proposed to increase a space factor by using, for example, a rectangular wire and broaden a cross-sectional area of slots. A concentrated winding system where a coil end length can be made shorter than that of a distributed winding system also exist as a winding system but the concentrated winding system does not provide a method of cooling or countermeasures for wind noise. Slot harmonics are substantial with regards to the concentrated winding system. This means that even if the order of the cogging torque is made large, the extent to which the stator core is deformed becomes large because the annular mode is small, causing a problem that noise is substantial when the core back is made thin.

In an embodiment of the present invention, rather than achieving low resistance by making the coil diameter thick, the number of windings or turns is reduced the thickness of the wire is increased so as to take up the space which becomes available. It is therefore possible to adopt a design where the amount of copper used does not change compared to that of the current winding system so that there is no increase in the cost of the copper lines.

The embodiment of the present invention also takes note of the number of poles of the rotor in order to reduce the number of windings. In particular, in recent years, engine transmission systems are more and more adopting continuously variable automatic transmissions rather than existing stepped automatic transmissions because of improved fuel consumption and transmission shock absorption. A continuously variable automatic transmission is capable of changing engine speed and axle speed in a stepless manner. The normal speed of the engine is therefore low compared to automatic vehicles of the relatedart. An alternator for a vehicle is designed to operate with a pulley ratio fixed with respect to the output shaft of the engine. Accordingly, the number of poles of a rotor has been determined so that the temperature increase due to iron loss of the stator at a rotation speed obtained by multiplying the maximum engine speed and a pulley ratio falls in a permissible range. The rotor of the alternator for a vehicle is adopting a claw pole structure made by bending a thickplate. Therefore, a silicon steel plate used for a stator core of typical motors, that is difficult to bend, is not used. Rather the stator core is made by layering multiple thin plates of SPCC (Steel Plate Cold Commercial) material into a cylindrical shape. The SPCC material is good for processing but has the drawback that iron loss is substantial. The SPCC material has however become widely used due to being cheap. A silicon steel plate is typically hard and processing to build up silicon steel plates into a similar cylindrical shape is not possible. An example is given where a stator core is made using a silicon steel plate punched out by a press. However, costs increase because the material for the portions corresponding to the rotor cannot be used. An alternator for a vehicle therefore typically has approximately 12 poles.

Since an alternator for a vehicle rotates in synchronization with an engine, the most effective way to use the alternator is to increase the efficiency of the alternator in the engine speed range in which the engine is most frequently used. The number of poles for the alternator for a vehicle is decided as follows in the embodiment of the present invention. That is, the number of poles is chosen so as to cause the least loss in a rotational speed range in which the engine of a vehicle provided with the alternator for a vehicle is most frequently used based on the ratio and amounts of a copper loss and an iron loss of the stator. The stator coils are wound by the concentrated winding system in order to achieve low noise.

Furthermore, the configuration of the embodiment of the present invention is such that cooling air of the cooling fan does not collide directly with the stator coil and wind noise is therefore reduced.

In the following, a description of the embodiment of the present invention is given using the drawings.

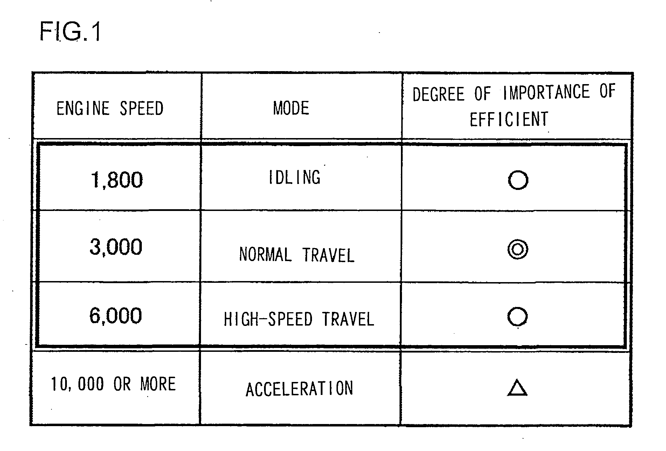

FIG. 1 shows a degree of importance of efficiency with respect to the frequency of use of the rotation speed of the alternator for a vehicle. As shown in the table, a rotation speed for the alternator for a vehicle around 3000 rpm corresponding to a normal running mode of the vehicle is the most commonly used speed. It is therefore effective to increase efficiency at the rotation speed corresponding to the normal running mode. The engine speed is a value obtained by dividing the rotation speed of the alternator for a vehicle by a pulley ratio, and thus the engine speed is 1200 to 1500 rpm when the rotation speed of the vehicle alternator is 3000 rpm. The next most frequently used speed is a speed of 1800 rpm corresponding to idling or a speed of 6000 rpm occurring in a high-speed way travel mode. The alternator for a vehicle is of a mechanical strength capable of enabling rotation at speeds of up to 20, 000 rpm but the frequency of use at speeds of 10,000 rpm or more is extremely small. This means that it is important to design the alternator for a vehicle so as to achieve high efficiency at a rotation speed of 6,000 rpm or less. In particular, since continuously variable automatic transmissions have become widespread in recent years, the frequency with which the engines are used at high speed has also fallen. This also causes alternators for vehicles to operate at comparatively low speeds more frequently.

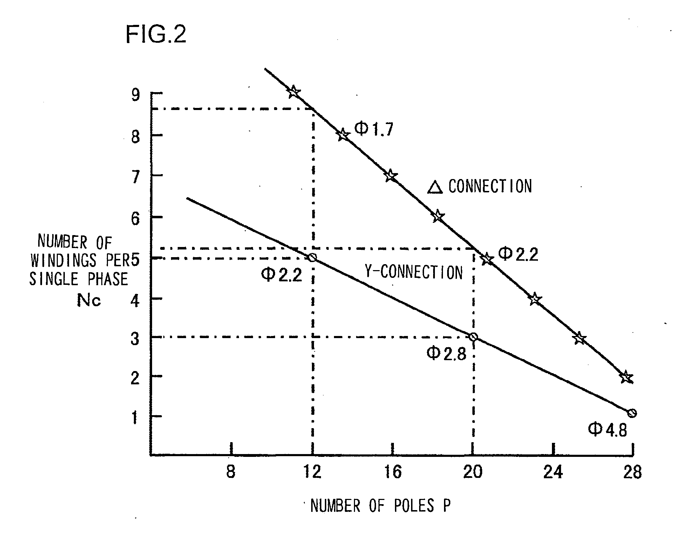

The relationship between the number of poles of a rotor and the number of windings for a stator constituting the alternator for a vehicle for the case of a matching cut-in speed is shown in FIG. 2. Basically, the alternator for a vehicle rotates at a speed increased from that of the engine by a pulley ratio of 2 to 3. A configuration is therefore required where it is possible to start generating electricity when the speed of the alternator for a vehicle is 1,200 to 1,300rpm. An electricity generation starting voltage should be higher than the voltage provided by a connected battery. This electricity generating voltage is proportional to the number of poles and the number of windings of the stator. This means that in the case where a 12-pole alternator for a vehicle is configured with a single phase coil wound by five turns, it is possible to reduce the number of windings or turns by increasing the number of poles. This situation is shown in FIG. 2. For example, if the number of poles is changed to 20 poles, the windings can be changed from five turns to three turns. If the number of windings is lowered, it is possible to reduce the inductance of the generator. Therefore, by increasing the number of poles, the electrically generated output is tend to increase, resulting in the improvement in performance. When the number of poles is changed to 20, in order to give the same space factor even though the number of windings is lowered, it is necessary to use a thicker wire by changing the wire diameter from Φ2.2 to Φ2.8. When the number of poles is increased up to 28, it is possible to wind a coil by one turn. In this event, rather than inserting a conductive wire into a slot, a structure can be considered where a copper bar is inserted into a slots, or where copper is cast into a slot. The above description gives the case where a Y-connection is used in the connection of three phases. When the number of windings becomes lower, the diameter of the wire becomes thicker and there may be cases where this is detrimental to productivity. In this event, it is possible for the wire diameter to become thinner as the number of windings increases by adopting a delta-connection so that there may then be cases where productivity increases.

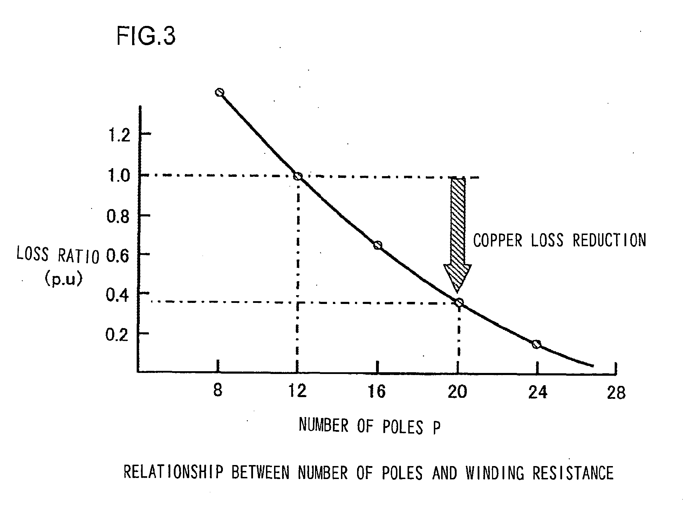

FIG. 3 shows the resistance ratio of conductive wire when the number of poles is increased. In the drawing, as in the case with the same current, the fall in resistance is equal to the fall in loss and the resistance ratio is therefore shown as a loss ratio. It can therefore be understood that a reduction in copper loss for the stator of approximately 64 percent is possible when changing from 12 poles to 20 poles.

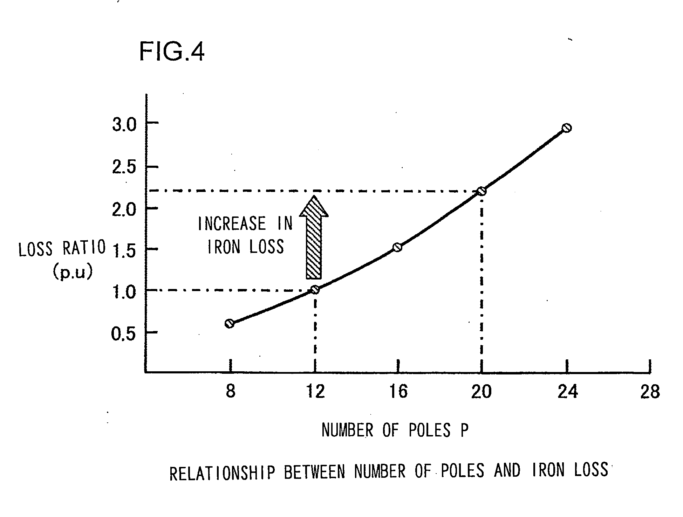

FIG. 4 conversely shows iron loss that deteriorates due to increasing the number of poles. In the event that 0.5t of SPCC is used as the stator core material, when the iron loss for the current 12 poles is taken to be 1.0, it can be understood that the iron loss increases by approximately 2.2 times by changing the number of poles to 20.

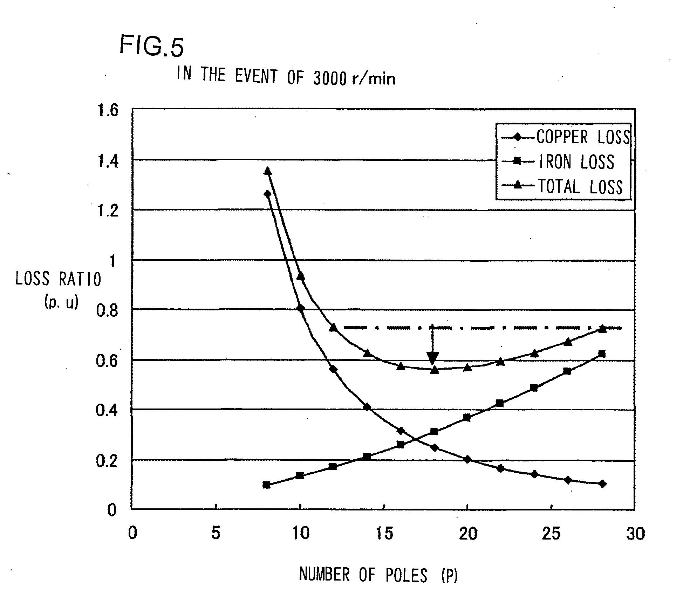

In the graph of Fig. 5, the ratios of copper loss and iron loss of the stator illustrated in FIGS. 3, 4 are shown, taking into consideration the ratio of the absolute values of the current copper loss and iron loss. It can be understood that as a result of adding these values of losses, the number of poles for which loss is a minimum is from 16 to 20 poles. Further, when copper loss falls together with an increase in the number of poles, the iron loss increases but it is known from the relationship for the amount of lowering that the total loss increases as the iron loss increases when the number of poles becomes more than 16 to 20. However it can also be understood that the loss becomes smaller than the current loss at the SPCC core material for up to 28 poles.

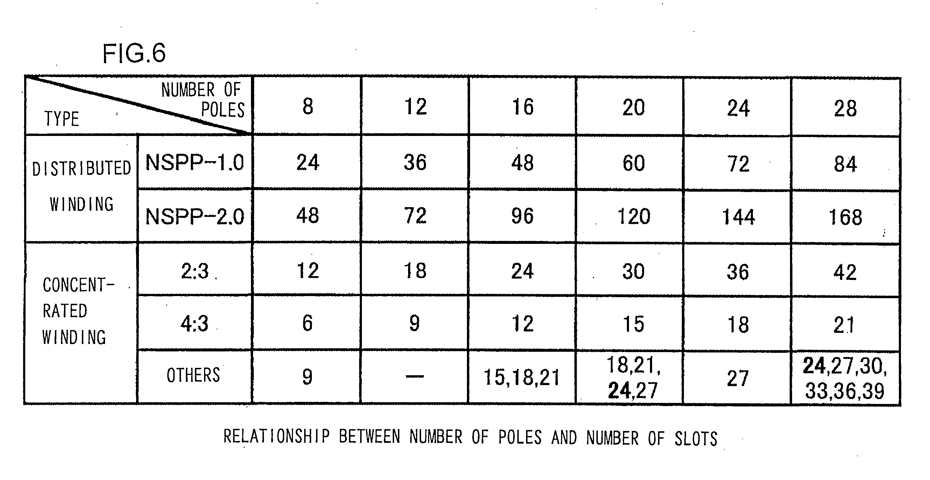

FIG. 6 shows the relationship between the number of poles and the number of slots. The distributed winding system and the concentrated winding system are shown as winding methods. The cases for slot numbers by phase per pole (NSPP) of 1 and 2 are shown for the distributed winding system. For the concentrated winding system, as examples of ratios of the number of poles for the rotor and the number of slots, a ratio of 2:3 and a ratio of 4:3, together with other combinations are shown. As can be understood from the figure, the number of slots also increases as the number of poles is increased. In particular, with the distributed winding system, when the number of poles of 20 or more is selected with the NSPP of 2, manufacture becomes difficult because a teeth width becomes narrow. With the concentrated winding system, it can be understood the maximum slot number is 42 in the range shown in the figure, which is not great enough to make manufacture difficult.

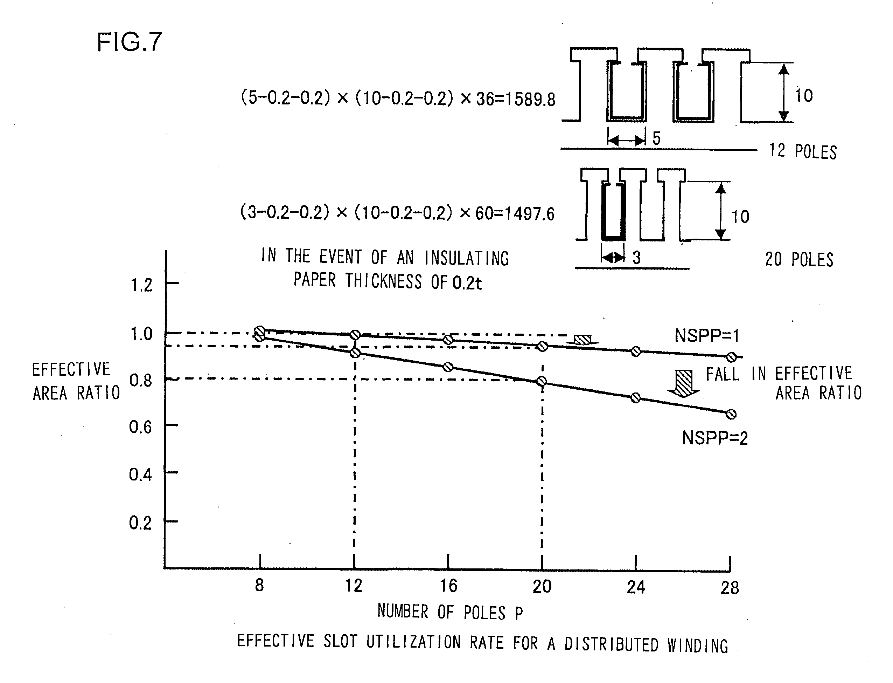

FIG. 7 shows an evaluation of actual effective area within a slot with respect to the number of poles in the case of the distributed winding system. When the number of poles is increased, the number of slots also increases and it can therefore be understood that the lowering of the effective area occurs as a thickness of insulating paper bears no relation to the number of slots. In particular, when the NSPP is 2, the number of slots doubles and lowering of the effective area is therefore considerable. When the number of poles is increased too much in the distributed winding system, since the effective area of a space for accommodating a coil is decreased, the degree of reduction of a copper loss becomes small.

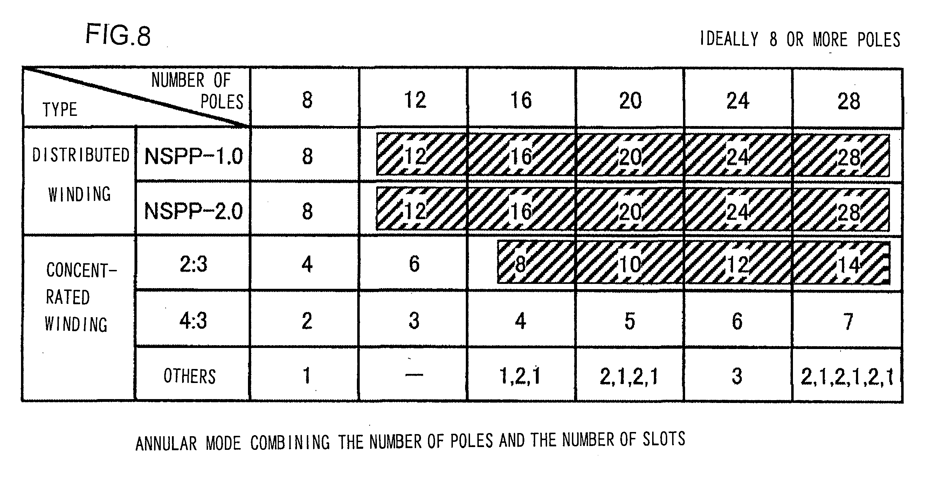

Next, an explanation is given of an annular mode that is deeply related to noise, using Fig. 8. The annular mode indicates a value that is a minimum combination of the number of poles for the rotor and the number of poles for the stator. For example, a description is given of the case for 12 poles and 36 slots in the distributed winding system. At least three teeth form one group in the case of three-phase coils. A single rotor pole is opposed to the group of the three teeth. Modeling for the entirety can be made by repeating this group. This means that the annular mode of 12 is obtained by dividing 36 slots by 3. The annular mode does not change at 12 even if the NSPP becomes 2. This value of 12 indicates that a pressing force acts equally at 12 locations at the stator core so that the annular mode of 12 represents that deformation of the stator core is small. When the annular mode is small, the amount of deformation of the stator core becomes substantial. This means that noise then occurs easily. In a typical motor, when the annular mode is 6 or less, the noise generated is substantial, which is not suitable for use. The annular mode should therefore ideally be made 8 or more. When the annular mode is small, this can be countered by making the core back thick. However, in the case of an alternator for a vehicle, restrictions are placed on the size according to an installation space. It is therefore preferable to adopt the annular mode that is as large as possible. From the table shown in FIG. 8, it can be understood that it is possible to achieve the ideal annular mode of 8 or more, by employing the combinations of 8 poles or more for the distributed winding system, and 16 poles to 24 slots, 20 poles to 30 slots, 24 poles to 36 slots, and 28 poles to 42 slots for a series of 2 : 3 of the concentrated winding system. In the other combination, the annular mode is 8 or less, which is disadvantageous from the point of view of noise and makes it necessary to design the core back to be thick. However, other than for noise, it is possible to increase efficiency because total loss can be reduced by making the number of poles 16 or more.

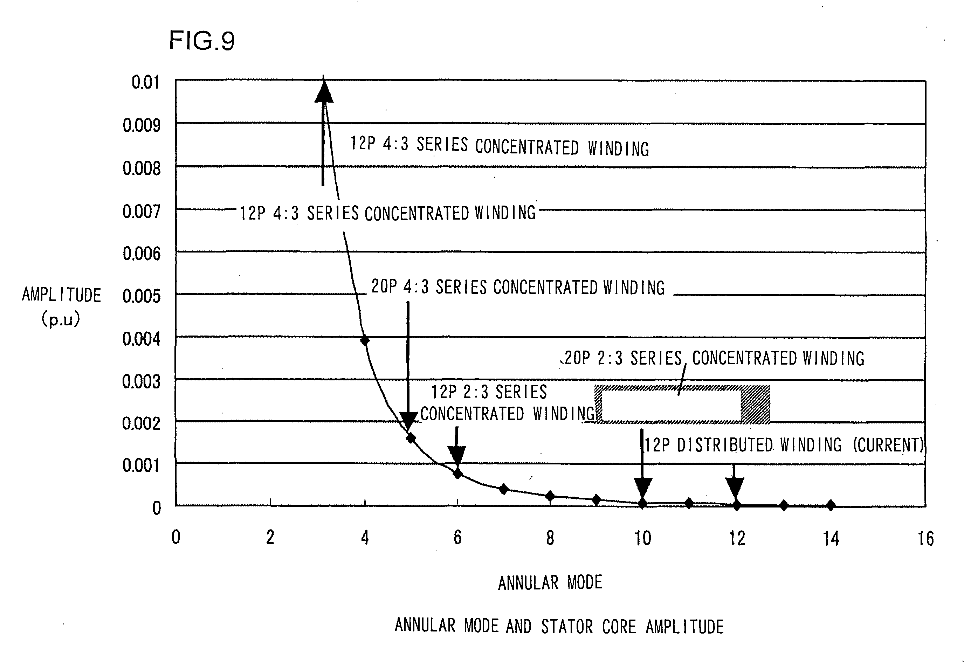

FIG. 9 is a graph showing the relationship between the annular mode and stator core amplitude. The standard for the calculation is carried out using a formula such that the amplitude is proportional to the inverse of the fourth power of the annular mode. As can be understood from the graph, with regards to the current annular mode of 12 with 12-pole/36-slot, 20-pole/30-slot gives an annular mode of 10, which means that the extent of deformation doubles. With other combinations however, with the same 20 poles, a series of 4 : 3, that is, for instance, 20-pole/15-slot gives an increase in the amplitude by 33 times and reducing the noise therefore becomes extremely difficult. In the case of the amplitude greater by up to 3 times, the thickness of the core back is made approximately 1.5 times thicker in order to reduce the noise. However, in practical terms, providing countermeasures for the noise for the amplitude greater by 33 times is difficult.

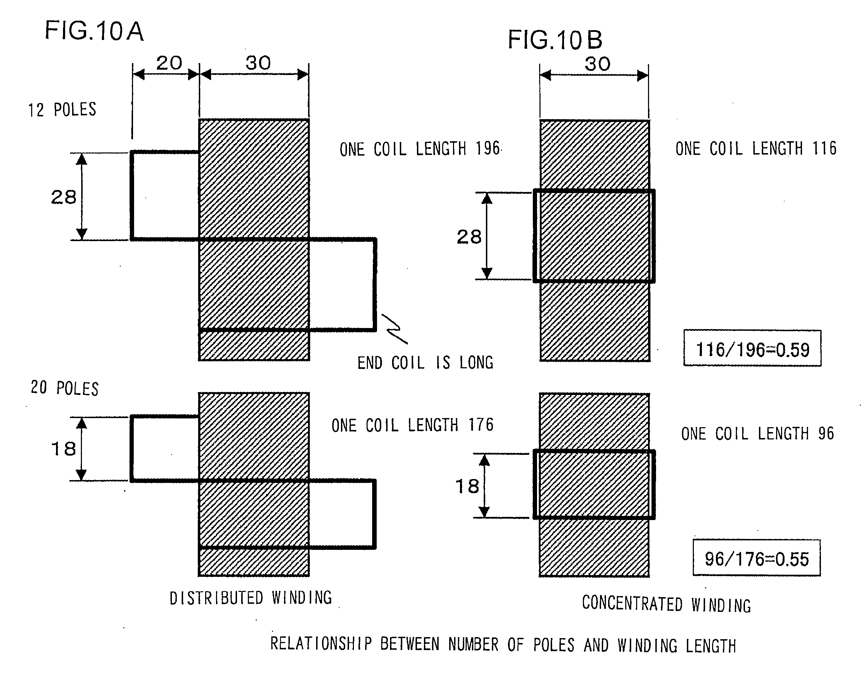

FIGS. 10A and 10B are schematic views showing that the effect of reducing the length of the wire can be made substantial by changing to the concentrated winding system from the distributed winding system when the number of poles is increased. FIG. 10A shows an example of the distributed winding system and FIG. 10B shows an example of the concentrated winding system with an example of 12 poles and an example of 20 poles shown in an upper side and in a lower side of each figure. The stator cores are shown by hatching and the coils are shown by solid lines. As shown in the upper side of FIG. 10A, in the case of 12 poles, a length of the coil wound in the stator core is 30x20, a coil pitch is 28x2, and an end coil portion is 20x4 so that a coil length is added up to 196. As shown in FIG. 10B, the coil end part becomes small at the concentrated winding system for the 12 poles. The coil length is therefore given by the coil pitch 28x2 and the stator core winding portion 30x2, so as to give a coil length of 116. Therefore, in the case of 12 poles, an effect of reducing the length indicated as 0.59 is achieved by changing from the distributed winding system to the concentrated winding system. In the case of 20 poles, this becomes 0.55, and as the number of poles becomes larger, so the effect of reducing the length when changing from a distributed winding to a the concentrated winding system becomes larger. This is one merit of a the concentrated winding system.

### - First Embodiment -

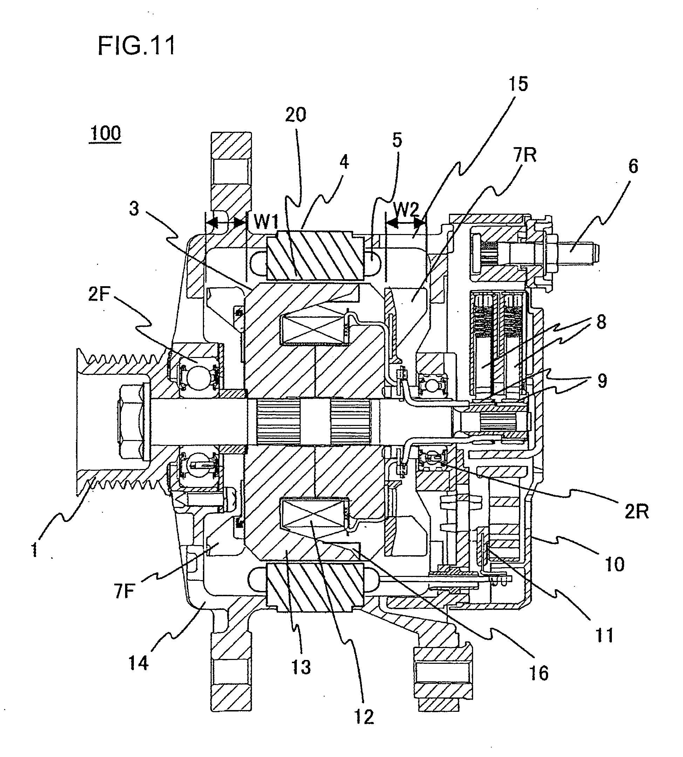

A description is now given of a configuration for an alternator for a vehicle 100 of a first embodiment of the present invention using FIG. 11.

Claw poles 13 are arranged around a central section of the shaft at a rotor 3 and a field coil 12 is provided at its central section. A pulley 1 is fitted to one end of the shaft and a slip ring 9 for supplying power to the field coil 12 is provided on the other side. A cooling fan constituted by a front fan 7F and a rear fan 7R that rotates in synchronism with rotation of the rotor 3 is provided at the end surfaces of the claw poles 13 of the rotor 3. Permanent magnets 16 are disposed between the claw poles 13 in order to provide additional excitation so as to increase the magnetic flux of the field coil 12. On the other hand, a stator 4 is constructed from stator poles 20 and stator coils 5 and is arranged facing the rotor 3 with a slight gap intervening therebetween. The stator 4 is supported by a front bracket 14 and a rear bracket 15. Both of the brackets 14 and 15 and the rotor 3 are supported in a rotatable manner by bearings 2F and 2R. The slip ring 9 described above is constructed so as to supply electrical power through contact with a brush 8. The stator coils 5 are three-phase coils and a lead wire of each of the stator coils 5 are connected to a rectifier circuit 11. The rectifier circuit 11 is constituted by rectification elements such as diodes so as to form a full-wave rectifier circuit. For example, when the rectification elements are diodes, cathode terminals are connected to a terminal 6 while anode terminals are electrically connected to the body of the alternator for a vehicle. A rear cover 10 is a protective cover for the rectifier circuit 11.

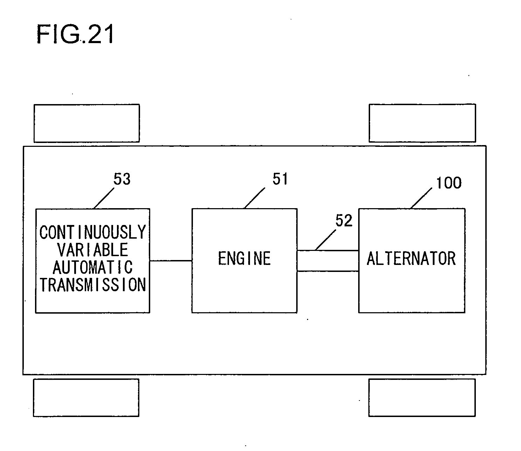

Next, a description is given of an electricity generating operation of the alternator for a vehicle. A block diagram of a vehicle mounted with an engine 51 and the alternator for a vehicle 100 is shown in FIG. 21. The engine 51 and the alternator for a vehicle 100 are typically linked by a belt 52. The alternator for a vehicle 100 is connected to the engine side by the belt 52 using the pulley 1 and the rotor 3 rotates together with rotation of the engine 51. The claw poles 13 are magnetized as a result of current flowing in the field coil 12 provided at the central section of the claw poles 13 of the rotor 3. Induced electromotive force is then generated for three phases at the stator coils 5 by rotating the rotor 3. Its voltage is then full-wave rectified by the rectifier circuit 11 and a DC voltage is generated. The plus side of the DC voltage is connected to the terminal 6 and is also connected to a battery (not shown). A field current is controlled so that the DC voltage after rectification becomes a voltage appropriate for charging the battery, although its detail is omitted here.

The stator poles 20 and the stator coils 5 are not disposed at the outside of the front fan 7F and the rear fan 7R that are the cooling fan but are rather all disposed on the inside between the fans 7F and 7R. This means that although air from the fans 7F and 7R is blown out in a peripheral direction after being taken in from an axial direction of the alternator for a vehicle, the air does not interfere with the coil ends and wind noise can therefore be made small. That is, only air outlet ports provided at the brackets 14, 15 are disposed in the outer diameter direction of the portions W1 and W2 shown in the figure.

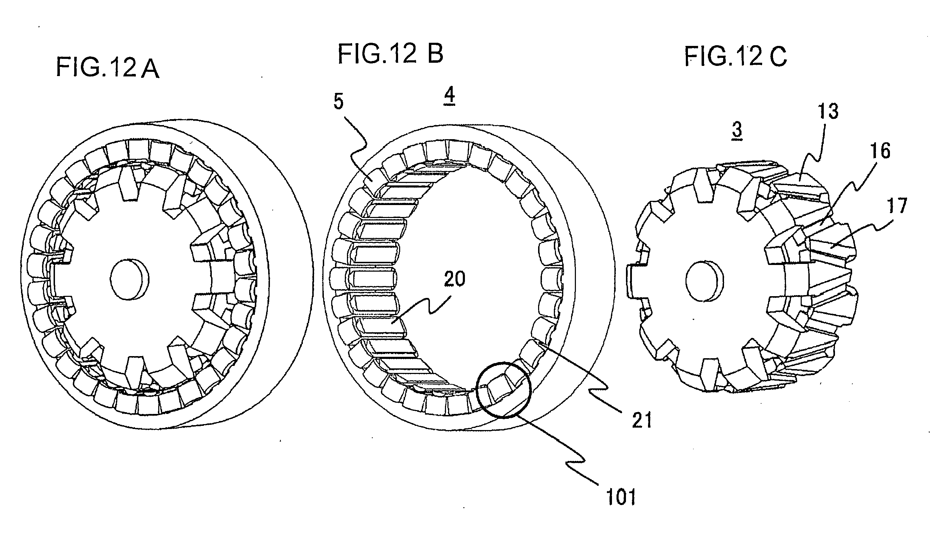

Next, a description is given of the relationship of the rotor 3 and the stator 4 using FIGS. 12A to 12C. FIG. 12B is a perspective view of the stator 4, FIG. 12C is a perspective view of the rotor 3, and FIG. 12A is a perspective view of when the stator 4 and the rotor 3 are combined. FIGS. 12A to 12C show a magnetic circuit with 20 rotor poles and 30 stator poles that adopts the concentrated winding system. The permanent magnets 16 that provide additional excitation are mounted between the claw poles of the rotor 3. The permanent magnets are provided in line with the performance required of the alternator for a vehicle and can be omitted. It is possible to use ferrite magnets and neodymium magnets when the magnets are mounted. When the permanent magnets 16 are provided between the claw poles 13, it becomes difficult for cooling air to pass between the claw poles 13. When cooling is considered, it is effective to provide gaps or clearances allowing wind to pass between the stator coils 5. According to this embodiment, as shown for, for example, a portion 101, the coil ends at the stator 4 can be made round. This means that air can pass efficiently and wind noise can be reduced when air passes in an axial direction. A cutout portion referred to as a bevel 17 is provided at the claw pole 13 at a rear side in a direction of rotation in order to reduce magnetic noise. The stator coils 5 can be wound directly at the stator poles 20 or can be made using divided cores for ease of manufacture.

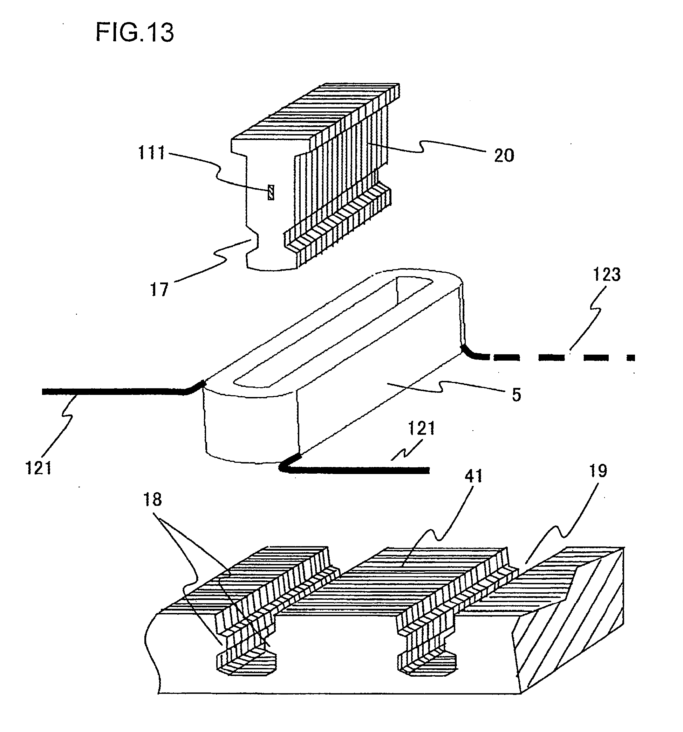

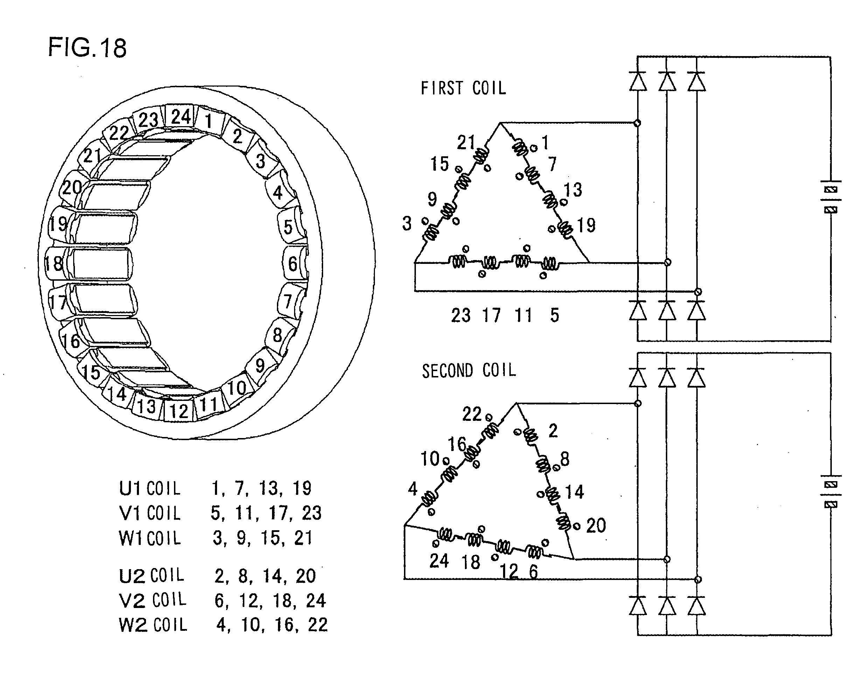

A structure forming a core with divided core blocks is shown in FIG. 13. In this embodiment, I-shaped stator poles 20 are used to give priority to ease of manufacture. Recesses 17 are provided at fitting sections of the I-shaped stator poles 20 for fitting with a core back 41. Projections 18 linking to the recesses 17 of the stator poles 20 are provided at the core back 41. The core back 41 extends in a straight line in a state where stator pole insertion sections 19 are empty. The stator poles 20 and the core back 41 are made of laminated steel formed by laminating thin steel plates. The stator poles 20 are then caulked at a central portion 111. In the manufacturing process, first, the stator coils 5 made in advance are inserted from an axial direction at the stator poles 20. The stator poles 20 fitted with the stator coils 5 are then inserted at the core back 41 from an axial direction. In this state, they are not fixed due to a play, the stator poles 20 are able to be fixed without a play through distortion of the core back 41 at its inner periphery side when the core back 41 developed in a straight line is formed into a circular shape by using a roller. Connection lines 121 of the stator coils 5 are arranged as shown by the solid lines when the stator coils 5 are wound at an integral number of times. In the case when it is desired to reduce the number of windings or turns per one coil and construct a winding 5 of 0.5 turns, a wiring method represented with a connection line 123 shown by the dotted lines may be employed. In particular, when the coils are wound tied so that the winding direction of the coils alternates as shown in FIG. 18, it is possible to arrange the connection lines on both sides of the stator 4. It is therefore possible to make the volume of the coil ends uniform. Although not shown in figure, a wiring is also possible where only neutral points are connected on the pulley side. The remaining three-phase coils are taken to be the diode side.

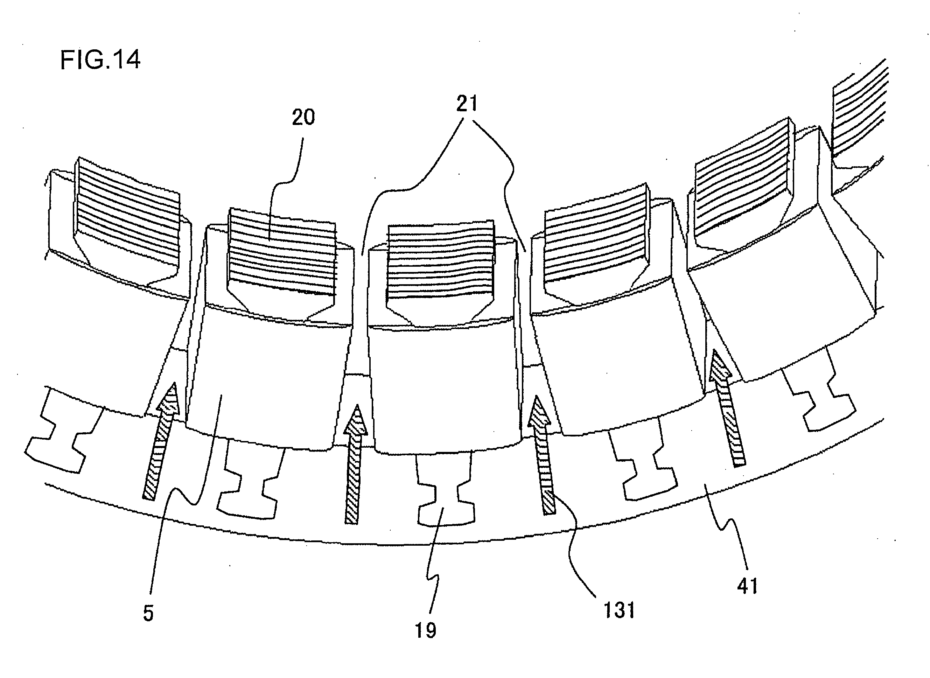

Next, an explanation is given of the flow of air within the stator coils 5 using FIG. 14. A wind path is formed in the directions shown by arrows 131 in the figure. When wind is to pass in an axial direction, the wind path is blocked in the case of a distributed winding because the coil end is formed continuously. However, with the concentrated winding system, a coil is wound concentrated at a single pole and the coil ends are therefore always independent and round, which is the most appropriate shape for an air path. With the alternator for a vehicle of this embodiment, the number of windings per single pole is reduced in order to increase the number of poles. When a construction is adopted where coils do not overlap, it is possible for cooling air to pass directly through the surface of all of the coils so as to improve the cooling efficiency.

When a continuously variable automatic transmission 53 is employed as a transmission connected to the engine 51, the alternator for a vehicle 100 works more effectively (refer to FIG. 21). The continuously variable automatic transmission 53 lowers the frequency with which the engine turns in the high-speed region compared to a stepped transmission such as a usual automatic transmission. The engine speeds of the engine 51 from an idling mode shown in FIG. 1 to a high-speed travelling mode are mostly equal to or less than 4000 rpm. A higher efficiency can therefore be anticipated for the alternator for a vehicle of this embodiment which is designed so as to focus on such an engine speed range as described. When the engine 51 is a diesel engine, frequency of operating at a specific engine speed range is high and there are merits to utilizing the alternator for a vehicle of this embodiment for the same reasons as described previously.

### - Second Embodiment -

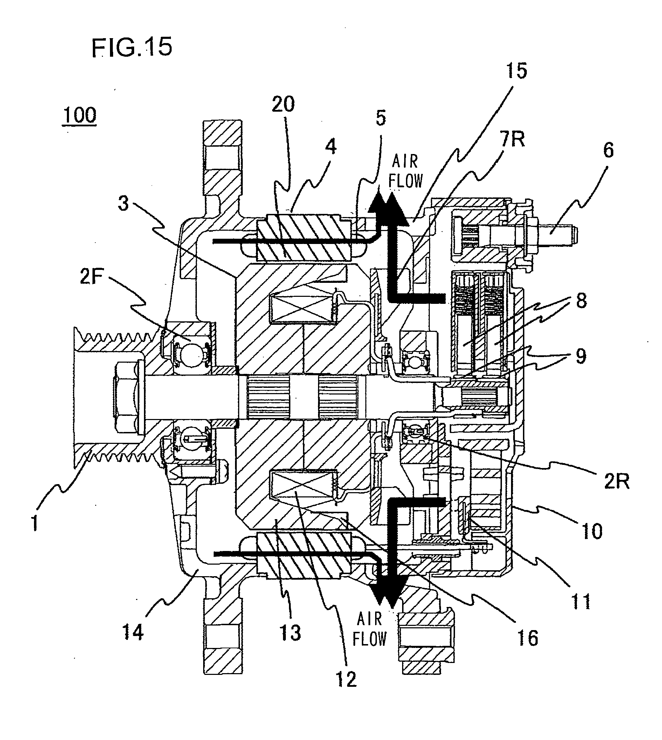

A structure for an alternator for a vehicle where air passes through stator coils in an axial direction according to a second embodiment of the present invention is shown in FIG. 15. The second embodiment is the same as the first embodiment with the exception of the specific items shown below.

It is possible to use an axial flow fan in order to forcibly guide wind in an axial direction within the stator coil 5. However, in this embodiment, it is possible to increase cooling of the rectification elements and to cause air to flow within these stator coils as a result of a pressure differential by providing a centrifugal fan at the side where the rectification elements are arranged.

In this embodiment, it is possible to substantially reduce copper loss by taking note of the most substantial stator copper loss and increasing the number of poles. However, an increase in iron loss as a result of increasing frequency is caused as a result. However, SPCC material currently used is the type of material for which iron loss is highest. If, for example, a thin magnetic steel plate is adopted only for the stator poles 20, it is possible to reduce increases in copper loss. It is therefore desirable to use SPCC that is superior with respect to processing ability because bending of the core back is necessary. Further, if the stator structure is a coil series-wound structure rather than a divided core structure, it is possible to substantially reduce increases in iron loss by forming the stator core as a whole with thin-film magnetic steel plates.

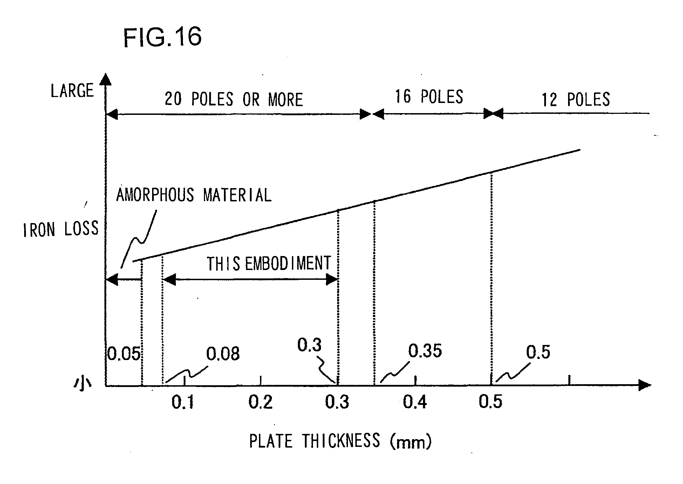

FIG. 16 is a graph showing the relationship between iron plate thickness and the number of poles. Plate thickness is approximately 0.5 mm for the most commonly used 12-pole alternators for a vehicle. When the number of poles is 16, a plate thickness of approximately 0.35 mm is adopted. When the number of poles is increasedtomorethanthis, it is suitable for the plate thickness to become even thinner, namely, to be around 0.2 mm. The reason for this is that Eddy current loss increases as a result of the increasing frequency. A thin plate is therefore effective in that it is possible to make a current path small in order to suppress Eddy current loss. In this embodiment, an alternator for a vehicle of 16 poles or more adopts a plate thickness of 0.35 mm or less. In this event, there is the fear of degradation of the magnetic characteristics as a result of punching distortion due to making the plate thickness of thin. Means for making the stator poles using etching therefore become practical.

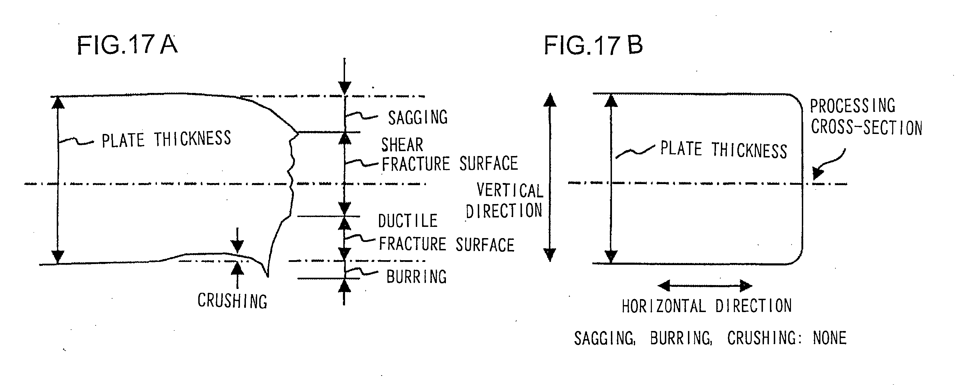

Comparisons of a cross-section for a punched iron plate resulting from typical press processing and a processed surface due to etching are shown in FIGS. 17A and 17B. FIG. 17A is a press-processed surface and FIG. 17B is an etching processed surface. As can be understood from the figures, magnetic characteristics of the pressed surface are degraded as a result of sagging and crushing of the edge and the thickness after laminating therefore is not uniform. This kind of phenomenon does not occur with etching. In the case where I-shaped stator poles are inserted into the core back as described previously, there is a chance that correct alignment may not occur when stator poles are formed by laminating the items that sag and have been crushed. The processed surface is therefore more attractive when made by etching and improvements in productivity are therefore anticipated.

Etching is carried out using a chemical reaction. The processing time can therefore be made short if the plate thickness is thin. Combinations where the plate thickness of the core back and the thickness of the stator poles on the teeth side are changed are also possible. In this event, the effect of preventing Eddy currents is more substantial when the thickness of the plate constituting the stator poles is made thinner than the thickness of the plate for the core back.

### - Third Embodiment -

FIG. 18 is a view showing a structure for a stator coil of a third embodiment of the present invention. FIG. 18 shows the arrangement for a 20-pole/24-slot, or a 28-pole/24-slot stator coil where independent three-phase coils are constructed with a phase difference corresponding to an electrical angle of 30 degrees. The third embodiment is the same as the first embodiment with the exception of the specific items shown below.

This 24-slot structure is arranged with a phase difference for electrical angles of 30 degrees with neighboring slots having the same phase. The odd-numbered first coils and the even-numbered second coils are shown to be rectified independently. In this case, if the number of windings for the first coils and the number of windings for the second coils are different from each other, it is possible to implement a generator capable of outputting two types of generated voltage. When the numbers of winding are the same, by linking or connecting the DC sides after independent rectification, then this gives a parallel connection. In this event, a ripple component is canceled out because voltage ripple fluctuating every 60 degrees as a result of a full-wave rectification for three-phase currents generated at the first coils and the voltage ripple of the second coils are offset from each other electrically by 30 degrees. The voltage ripple therefore becomes small and current ripple of the load current also becomes small. Noise referred to as magnetic noise also becomes small. A delta-connection is shown in the figure but a Y-connection also obtains the same results. The numbers given to the coils in the drawings refer to the coil numbers and the round marks indicate the direction of winding of the coils. The same marks indicate the same winding direction, and conversely the opposite marks indicate that the winding direction is reversed. It is also possible to increase the coils wound at one pole by connecting coils for each phase allinparallel. In this case, it is possible for the remaining coils to generate electricity even if a coil for a single pole is cut and this enables reliability to be increased.

### - Fourth Embodiment -

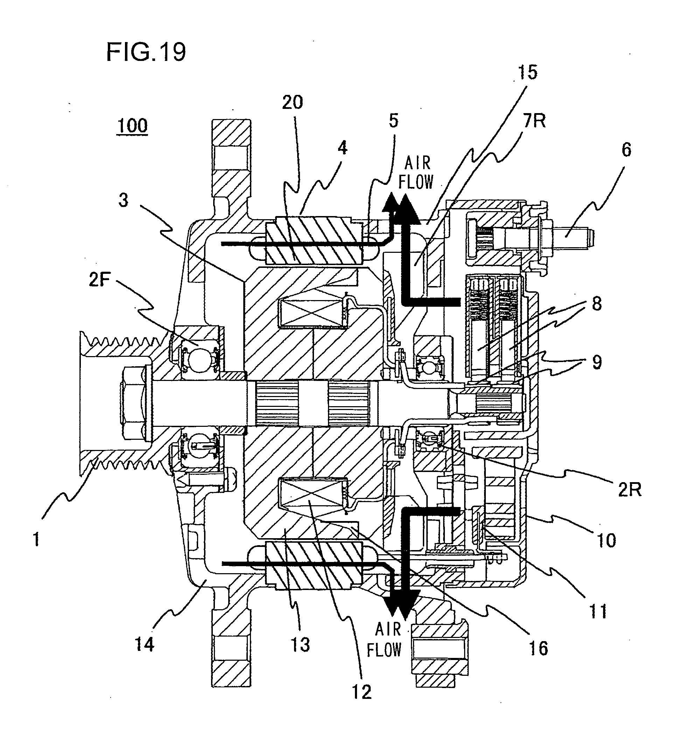

FIG. 19 shows a structure for an alternator for a vehicle of a fourth embodiment of the present invention. The fourth embodiment is the same as the first embodiment with the exception of the specific items shown below.

In this embodiment, the outer diameter of the rear fan 7R is made to be larger than the outer diameter of the rotor 3. This means that a structure is adopted which facilitates taking in of wind in an axial direction of the stator 4, resulting in that a still larger cooling effect is acquired. The figure shows the rear fan 7R made large but it is also possible to obtain the same results by employing only the front fan 7F and making the diameter of the front fan large.

### - Fifth Embodiment -

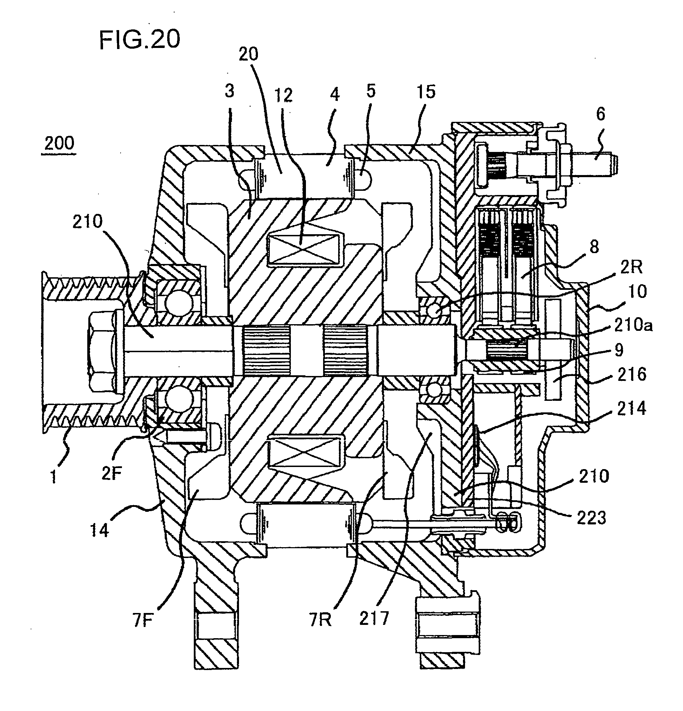

FIG. 20 shows a structure for a rotating electric machine 200 of a fifth embodiment of the present invention. In this embodiment, instead of the rectifier circuit 11, a power module 214 that is a semiconductor element for power rectification is used. The rotating electric machine 200 is a starter generator that normally acts as a generator that uses rotation of the engine, while, when the engine is to be started, the rotating electrical machine controls the power module 214 to operate as a rotating electric machine, so as to enable the engine connected by a pulley to be started. The fifth embodiment is the same as the first embodiment with the exception of the specific items shown below.

The power module 214 is equipped with a semiconductor element for power constituting a switching circuit such as, for example, a MOS (complementary metal oxide semiconductor), or an IGBT (insulated gate transistor). At the power module 214, the semiconductor elements are connected to an insulating substrate via a solder layer. A laminated body is then constructed from the semiconductor elements, a solder layer, an insulating substrate, a solder layer, and a heat sink 223.

This power module 214 is fitted to the outer surface of a rear bracket 210 using a screw thread. Grease is interposed at the power module fitting surface, i.e. between the heat sink 223 and the rear bracket 210. Numeral 216 is a magnet for detecting the position of rotation of the rotor.

An inner surface of the rear bracket 210 that is on the opposite side to the power module fitting surface faces one end surface of the rotor 3 fitted with the fan. The rear bracket 210 and the heat sink 223 fitted with the power module 214, the insulating substrate, and the semiconductor elements constitute a laminated structure. The heat sink 223 is formed from a material with a superior thermal conductivity such as, for example, aluminum. A fin 217 having a heat dissipating function is provided at the inner surface of the rear bracket 210 fitted with the power module 214.

The fin 217 is formed so as to radiate from the rotor shaft 210 as a center.

The power module 214 is covered by a cover housed within a case formed on the surface of the heat sink 223. Power semiconductor elements of the power module 214 are connected to a bus bar via wire bonding.

According to this embodiment, the rear bracket 210 is taken as a heat dissipating plate that is capable of dissipating heat generated by the power module 214 that makes contact with the heat dissipating plate via the heat sink 223. In particular, the power semiconductor elements are fitted either directly or via a heat transmitting member so that a heat generating surface on the fitting side faces towards the rear bracket 210. This is to say that it is possible to increase the heat dissipating effects due to the rear bracket 210 because the structure is adapted that makes it easier for heat of the heat generating source to escape to the rear bracket 210, the heat dissipating capacity of the rear bracket 210 is large, and the inner surface of the rear bracket 210 is exposed to the inside of the alternator (between the end surface of the rotor with the fan and the inner surface of the rear bracket) that provides a path for cooling air via the fin 217. It is therefore possible to improve the cooling of the power module 214.

According to the first to fifth embodiments described above, it is possible to implement a highly efficient rotating electric machine for a vehicle that has reduced stator copper loss by adopting the number of rotor poles of 16 or more, and adopting the concentrated winding system that is capable of enabling the cooling of coil ends by air flowing in an axial direction. It is also possible to bring about a superior rotating electric machine for a vehicle by adopting a combination configured as a ratio of 2 : 3 for the concentrated winding system in order to reduce magnetic noise.

It is also possible to achieve improved reliability even for the starter generator depicted in the fifth embodiment by adopting a configuration where coiils for each phase in a the concentrated winding system configuration are all taken to be parallel windings.

The alternator for a vehicle of the first to fifth embodiments described above has the stator 4 of the concentrated winding system where a single phase stator coil 5 is wound around a single pole, and the rotor 3 of 16 poles or more is arranged opposite the stator 4 so as to rotate via a gap. The pole ratio of the rotor 3 and the stator 4 is 2:3.

The following combinations are possible for the number of poles for the rotor 3 and the number of poles for the stator 4 so as to give a pole ratio for the rotor 3 and the stator 4 of 2:3.
(1) 16 poles for the rotor 3 and 24 poles for the stator 4.
(2) 18 poles for the rotor 3 and 27 poles for the stator 4.
(3) 20 poles for the rotor 3 and 30 poles for the stator 4.
(4) 22 poles for the rotor 3 and 33 poles for the stator 4.
(5) 24 poles for the rotor 3 and 36 poles for the stator 4.
(6) 26 poles for the rotor 3 and 39 poles for the stator 4.
(7) 28 poles for the rotor 3 and 42 poles for the stator 4.

In the first to fifth embodiments described above, the poles of the stator 4 may be arranged with a phase difference corresponding to an electrical angle of 120 degrees.

The above-described embodiments are examples, and various modifications can be made without departing from the scope of the invention.

## Claims

1. An alternator for a vehicle comprising:
a stator that is configured by a concentrated winding system in that a stator coil for a single phase is wound on a single pole; and
a rotor with 16 or more poles, that is disposed to face the stator so as to be rotatable with a gap intervening therebetween, wherein:
a pole ratio of the rotor and the stator is 2:3.

2. An alternator for a vehicle according to claim 1,
wherein:
the number of poles for the rotor is 16, and the number of poles for the stator is 24.

3. An alternator for a vehicle according to claim 1,
wherein:
the number of poles for the rotor is 18, and the number of poles for the stator is 27.

4. An alternator for a vehicle according to claim 1,
wherein:
the number of poles for the rotor is 20, and the number of poles for the stator is 30.

5. An alternator for a vehicle according to claim 1,
wherein:
the number of poles for the rotor is 22, and the number of poles for the stator is 33.

6. An alternator for a vehicle according to claim 1,
wherein:
the number of poles for the rotor is 24, and the number of poles for the stator is 36.

7. An alternator for a vehicle according to claim 1,
wherein:
the number of poles for the rotor is 26, and the number of poles for the stator is 39.

8. An alternator for a vehicle according to claim 1,
wherein:
the number of poles for the rotor is 28, and the number of poles for the stator is 42.

9. An alternator for a vehicle according to claim 1,
wherein:
the poles of the stator are arranged with a phase difference corresponding to an electrical angle of 120 degrees.

10. An alternator for a vehicle according to claim 1,
wherein:
a clearance through which cooling air passes in an axial direction is provided between the stator coils.

11. An alternator for a vehicle according to claim 1, further comprising:
a fan provided at the rotor, wherein:
a coil end of the stator coils wound around the stator is arranged inside with respect to a position of the fan in an axial direction.

12. An alternator for a vehicle according to claim 1, further comprising:
a rectifier circuit; and
a fan provided at one end surface of the rotor on a side of the rectifier circuit.

13. An alternator for a vehicle according to claim 1,
wherein:
the stator coils are connected through a delta-connection method.

14. An alternator for a vehicle according to claim 1,
wherein:
the stator further comprises a space for allowing air to pass through in a slot through which the stator coil is wound so that cooling air passes through the space in an axial direction.

15. An alternator for a vehicle according to claim 1,
wherein:
a stator core constituting the stator is formed with steel plates each thickness of which is 0.35 mm or less and each steel plate is an etching steel plate.

16. A vehicle comprising:
the alternator for a vehicle according to claim 1;
an engine to which the alternator for a vehicle is connected as a generator; and
a continuously variable automatic transmission connected to the engine.

17. A vehicle comprising:
the alternator for a vehicle according to claim 1, and
a diesel engine with the alternator for a vehicle connected as a generator.

18. A method for manufacturing the alternator for a vehicle according to claim 1, comprising:
arranging a core back of the stator in a substantially straight-line;
providing a coil around an I-shaped tooth that is independent of the core back;
inserting the I-shaped tooth into a tooth insertion section of the core back from an axial direction; and
rounding the core back using a roller and welding the core back via an abutting section.

19. An alternator for a vehicle comprising:
a rotor with 20 poles;
a stator with 24 poles, that is disposed to face the rotor with a gap intervening therebetween, the stator comprising a stator coil constituted by first three-phase coils of even-numbered coils and second three-phase coils of odd-numbered coils arranged in a circumferential direction; and
a rectifier circuit that independently rectifies alternating currents of the first coils and the second coils.

20. An alternator for a vehicle according to claim 19,
wherein:
the stator coil is configured so that a number of windings of the first three-phase coils is the same as a number of windings of the second three-phase coils, and
DC voltages obtained through rectification by the rectifier circuit are connected electrically with each other.

21. A rotating electric machine for a vehicle comprising:
a stator that is configured by a concentrated winding system in that a stator coil for a single phase is wound at a single pole;
a rotor with 16 or more poles, that is disposed to face the stator so as to be rotatable with a gap intervening therebetween; and
a switching circuit connected to the stator coils,
wherein:
a pole ratio of the rotor and the stator is 2:3.
